# EUROPÄISCHE PATENTSCHRIFT

(11) **EP 1 967 744 B1**
(45) Veröffentlichungstag und Bekanntmachung des Hinweises auf die Patenterteilung: **02.11.2011**
(21) Anmeldenummer: 08002701.4
(22) Anmeldetag: 14.02.2008
(51) Int. Cl.: F15B 7/08, F15B 15/14

(54) **Hydraulikzylinder, insbesondere Geberzylinder für eine hydraulische KFZ-Kupplungs- oder Bremsbetätigung, und Verfahren zur Herstellung eines Kolbens hierfür**
Hydraulic cylinder, in particular master cylinder for a hydraulic motor vehicle coupling or brake control and method for creating a piston for this
Cylindre hydraulique, en particulier maître-cylindre pour un actionnement d'embrayage ou de frein de véhicule automobile hydraulique, et procédé de fabrication d'un piston correspondant

(30) Priorität: 03.03.2007 DE 102007010835
(43) Veröffentlichungstag der Anmeldung: 10.09.2008
(73) Patentinhaber: FTE automotive GmbH, 96106 Ebern (DE)
(72) Erfinder: Bauer, Hermann, 96106 Ebern-Unterpreppach (DE); Gebert, Stefan, 96242 Gestungshausen (DE); Stretz, Siegbert, 97500 Ebelsbach (DE); Tröster, Rudolf, 96169 Lauter (DE)
(74) Vertreter: Oppermann, Mark

(56) Entgegenhaltungen:
- DE-U1-202004 006 213

## Beschreibung

### TECHNISCHES GEBIET

Die vorliegende Erfindung bezieht sich auf einen Hydraulikzylinder entsprechend dem Oberbegriff des Patentanspruchs 1. Insbesondere bezieht sich die Erfindung auf einen Geberzylinder für eine hydraulische Kupplungs- oder Bremsbetätigung für Kraftfahrzeuge, wie sie massenweise im Automobilbau zum Einsatz kommen. Ferner bezieht sich die Erfindung auf ein Verfahren zur Herstellung eines Kolbens für einen Hydraulikzylinder.

In besagten Geberzylindern wird durch eine axiale Relativverschiebung des Kolbens bezüglich des Zylindergehäuses in einem vom Kolben im Zylindergehäuse begrenzten Druckraum ein Druck erzeugt. Mit diesem Druck wird etwa im Falle einer hydraulischen Kupplungsbetätigung ein mit dem Geberzylinder hydraulisch verbundener Nehmerzylinder beaufschlagt, welcher zum Ausrücken einer Kupplung mit der Kupplung wirkverbunden ist.

### STAND DER TECHNIK

Im Stand der Technik ist es bereits bekannt (DE 100 62 988 B4, DE 102 05 177 A1 DE 20 2004 006 213 U1), in solchen Geberzylindern insbesondere aus Köstengründen mehrteilig aus Kunststoff spritzgegossene Kolben einzusetzen. Die Mehrteiligkeit des Kolbens ist hierbei bedingt durch die Notwendigkeit, am Kolben eine Kolbenstange als Betätigungselement für den Kolben gelenkig anzubinden. So bestehen diese Kolben allgemein aus einem Kolbenaußenteil, das in dem Zylindergehäuse axial verschiebbar aufgenommen ist, und einem im Kolbenaußenteil befestigten Kolbeninnenteil, welches mit der Kolbenstange wirkverbunden ist.

Bei dem in der gattungsbildenden Druckschrift DE 100 62 988 B4 offenbarten Kolben wird die Kolbenmontage in zwei getrennten Schritten vorgenommen. Zunächst wird eine Schnappverbindung zwischen einem Kugelkopf an der Kolbenstange und dem einen Kugelsitz bildenden Kolbeninnenteil, dort "Kolbengelenkkopf" genannt, herbeigeführt. Die so vormontierte Einheit wird dann in eine Ausnehmung im becherförmigen Kolbenaußenteil eingesetzt und mittels eines Gewindeeingriffs darin eingeschraubt. Zu diesem Zweck ist die Ausnehmung im Kolbenaußenteil mit einem Innengewinde versehen, während der Kolbengelenkkopf einen Fortsatz mit einem entsprechenden Außengewinde aufweist.

Die Herstellung dieses Kolbens ist wegen der Gewindeanbringung aufwendig, zumal für die Verhinderung des Lösens der Schraubverbindung auch noch besondere Maßnahmen ergriffen werden müssen.

Bei dem aus der Druckschrift DE 102 05 177 A1 (Fig. 5) bekannten mehrteiligen Kolben wird die Verbindung zwischen dem hülsenförmigen, zum Druckraum des Geberzylinders hin offenen Kolbenaußenteil und dem dort "Verbindungsstück" genannten Kolbeninnenteil, welches ebenfalls einen Kugelsitz für einen Kugelkopf an der Kolbenstange aufweist, auf andere Weise hergestellt. So ist an dem Verbindungsstück ein axial vorstehender Zapfen vorgesehen, an dem außenumfangsseitig ein tannenbaumförmiges Radialprofil ausgebildet ist, welches mit dem Innenumfang des Kolbenaußenteils verhakt oder radial verspannt ist. In einer dazu alternativen Ausgestaltung erfolgt die Befestigung des Verbindungsstücks im Kolbenaußenteil mittels einer Schnappverbindung, bei der am axial vorstehenden Zapfen des Verbindungsstücks vorgesehene Schnapphaken einen radial nach innen vorstehenden Ringbund des Kolbenaußenteils radial nach außen übergreifen.

Ein Nachteil dieses Stands der Technik wird darin gesehen, daß zwischen dem Kolbenaußenteil und dem Verbindungsstück mittels einer Dichtung abgedichtet werden muß, um einen Druckverlust im bzw. eine Leckage von Hydraulikflüssigkeit aus dem Druckraum zu verhindern, was gemessen an den Anforderungen der Massenfabrikation aufwendig ist. Soweit ferner die Verbindung zwischen Kolbenaußenteil und Verbindungsstück im wesentlichen mittels Reibschluß erfolgt (Tannenbaumprofil), besteht die Gefahr, daß die Verbindung höheren Auszugskräften nicht standhält und das Verbindungsstück sich vom Kolbenaußenteil löst oder sich bezüglich des Kolbenaußenteils verlagert, was im schlimmsten Fall zu einem Totalausfall des Geberzylinders führen kann.

### AUFGABENSTELLUNG

Der Erfindung liegt die Aufgabe zugrunde, einen Hydraulikzylinder, insbesondere Geberzylinder für eine hydraulische Kupplungs- oder Bremsbetätigung für Kraftfahrzeuge zu schaffen, dessen mehrteiliger Kolben einfach hergestellt bzw. montiert werden kann und auch im Verhältnis hohen Auszugskräften ohne Beschädigung zu widerstehen vermag. Die Erfindungsaufgabe umfaßt ferner die Bereitstellung eines kostengünstigen und damit für die Massenfabrikation einsetzbaren Verfahrens zur Herstellung bzw. Montage des Kolbens für einen solchen Hydraulikzylinder.

### DARSTELLUNG DER ERFINDUNG

Die obige Aufgabe wird durch die im Patentanspruch 1 (Hydraulikzylinder) bzw. 18 (Verfahren zur Herstellung des Kolbens für den Hydraulikzylinder) angegebenen Merkmale gelöst. Vorteilhafte und/oder zweckmäßige Weiterbildungen der Erfindung sind Gegenstand der Patentansprüche 2 bis 17 bzw. 19.

Erfindungsgemäß ist bei einem Hydraulikzylinder, insbesondere Geberzylinder für eine hydraulische Kupplungs- oder Bremsbetätigung für Kraftfahrzeuge, der ein Zylindergehäuse, einen Kolben und ein Betätigungselement aufweist, wobei der Kolben mehrteilig aus Kunststoff spritzgegossen ist, mit einem becherförmigen Kolbenaußenteil, das in dem Zylindergehäuse einen Druckraum variabel begrenzt, und einem im Kolbenaußenteil befestigten Kolbeninnenteil, das mit dem Betätigungselement wirkverbunden ist; das Kolbeninnenteil im Kolbenaußenteil formschlüssig mittels einer Schnappverbindung befestigt, bei der wenigstens ein am Außenumfang des Kolbeninnenteils ausgebildeter, während der Kolbenmontage elastisch einfederbarer Rastbereich in einem zugeordneten Hinterschnittbereich verrastet ist, der am Innenumfang des Kolbenaußenteils spanlos durch Zwangsentformung beim Spritzgießen desselben ausgebildet ist.

Das erfindungsgemäße Verfahren zur Herstellung des Kolbens für einen solchen Hydraulikzylinder sieht die folgenden Schritten vor:
Spritzgießen des Kolbeninnenteils aus Kunststoff undvorzugsweise gleichzeitiges -- Ausbilden des wenigstens einen Rastbereichs am Außenumfang des Kolbeninnenteils,
zuvor, gleichzeitig oder danach Spritzgießen des becherförmigen Kolbenaußenteils aus Kunststoff unter Verwendung eines Werkzeugkerns zur Ausbildung eines Aufnahmebereichs für das Kolbeninnenteil, wobei der Werkzeugkern am Außenumfang eine erhabene Kontur zur Ausbildung des Hinterschnittbereichs am Innenumfang des Kolbenaußenteils aufweist und am Ende des Spritzgießvorgangs aus dem Kolbenaußenteil unter wenigstens teilelastischer Verformung des Kolbenaußenteils herausgezogen wird (Zwangsentformung), und
sodann Einführen des Kolbeninnenteils in das Kolbenaußenteil bis der Rastbereich am Außenumfang des Kolbeninnenteils nach elastischer Einfederung im zugeordneten Hinterschnittbereich des Kolbenaußenteils zur Ausbildung der Schnappverbindung verrastet.

Der vorgeschlagene Hydraulikzylinder läßt sich so auf denkbar einfache und kostengünstige Weise ausbilden, was diesen Hydraulikzylinder ebenso wie das vorgeschlagene Verfahren zur Herstellung des Kolbens für diesen Hydraulikzylinder für die Massenfabrikation prädestiniert. Nach dem Kunststoff-Spritzgießen, aus dem das Kolbeninnenteil und das Kolbenaußenteil als "werkzeugfallende" Teile resultieren, d.h. als Teile, die keiner mechanischen Nachbearbeitung mehr bedürfen, ist das Kolbeninnenteil lediglich in das Kolbenaußenteil axial einzuschieben bzw. einzustecken, bis das Kolbeninnenteil im Kolbenaußenteil verrastet. Zeitaufwendige Einschraubbewegungen od.dgl., wie sie im gattungsbildenden Stand der Technik benötigt werden, entfallen ebenso wie irgendwelche Sondermaßnahmen (z.B. Kleben), um das Kolbeninnenteil im Kolbenaußenteil zu sichern. Die durch den wenigstens einen Rastbereich am Kolbeninnenteil und den zugeordneten Hinterschnittbereich am Kolbenaußenteil bewirkte Schnappverbindung legt das Kolbeninnenteil im Kolbenaußenteil formschlüssig fest, so daß diese Verbindung auch im Verhältnis hohen Auszugskräften zu widerstehen vermag, ohne daß sich das Kolbeninnenteil aus dem Kolbenaußenteil löst. Da dennoch eine Konstruktion beibehalten wird, bei der das Kolbenaußenteil als becherförmiges Teil zum Druckraum des Hydraulikzylinders hin geschlossen ist, sind darüber hinaus auch keine aufwendigen Abdichtmaßnahmen zwischen Kolbenaußenteil und Kolbeninnenteil notwendig, wie sie im vorbeschriebenen Stand der Technik vorgesehen sind, um einen Druckverlust im bzw. eine Leckage von Hydraulikflüssigkeit aus dem Druckraum zu verhindern.

Im Hinblick auf einen möglichst optimalen Kraftfluß bei der Betätigung des Hydraulikzylinders ist es bevorzugt, wenn das im Kolbenaußenteil befestigte Kolbeninnenteil mit einer dem Druckraum zugewandten Stirnfläche an dem dem Druckraum zugewandten Boden des Kolbenaußenteils anliegt.

Im weiteren Verfolg des Erfindungsgedankens kann der Rastbereich mit einer im Längsschnitt gesehen konvexen, d.h. nach außen gewölbten Kontur über eine Mantelfläche des Kolbeninnenteils nach radial außen überstehen. Ebenso kann der Hinterschnittbereich mit einer im Längsschnitt gesehen konkaven, d.h. nach innen gewölbten Kontur in einer Innenfläche des Kolbenaußenteils ausgebildet sein. Solche Konturen mit Radien (konvex bzw. konkav) -- im Gegensatz zu eckigen Konturen -- sind zum einen besser zu entformen; zum anderen halten sich so die für die Kolbenmontage benötigten Kräfte vorteilhaft in moderaten Grenzen.

Hierbei kann die konvexe Kontur des Rastbereichs einen maximalen Durchmesser aufweisen, der vor der Montage des Kolbeninnenteils im Kolbenaußenteil geringfügig größer ist als der maximale Durchmesser der konkaven Kontur des zugeordneten Hinterschnittbereichs. Dies führt vorteilhaft zu einer dem Formschluß der Schnappverbindung überlagerten, radialen Verspannung des Kolbeninnenteils im Kolbenaußenteil. Ferner kann die konkave Kontur des Hinterschnittbereichs bezüglich der konvexen Kontur des zugeordneten Rastbereichs im montierten Zustand des Kolbens einen axialen Versatz in Richtung des Druckraums aufweisen. Ein solcher axialer Versatz führt vorteilhaft zu einer axialen Verspannung des Kolbeninnenteils im Kolbenaußenteil, so daß die Verbindung spielfrei gehalten wird und Fertigungstoleranzen der beiden Fügeteile ausgeglichen werden können. Zudem werden durch diese Ausbildung auch belastungsabhängige Setzeffekte im Betrieb über die Lebensdauer der Verbindung kompensiert.

Weiterhin kann das Kolbeninnenteil in axialer Richtung des Kolbens gesehen auf Höhe des Rastbereichs zur Erhöhung der Elastizität desselben mit wenigstens einem Durchbruch versehen sein.

Solche die Federwirkung des Rastbereichs verbessernde Durchbrüche lassen sich auf einfache Weise durch geeignete Vorsprünge in der Spritzgießform beim Spritzgießen des Kolbeninnenteils mit ausbilden und sorgen -- verglichen mit einer Ausgestaltung des Kolbeninnenteils ohne Durchbrüche -- vorteilhaft für eine Verringerung der Montagekräfte bei der Kolbenmontage.

Ferner kann der Rastbereich wenigstens einen sich in Umfangsrichtung des Kolbeninnenteils erstreckenden Federarm aufweisen, dessen freies Ende vor der Montage des Kolbeninnenteils im Kolbenaußenteil über den Außenumfang des Rastbereichs im übrigen nach radial außen übersteht. Auch derartige Federarme, die für eine weitere radiale Verspannung des Kolbeninnenteils im Kolbenaußenteil sorgen, lassen sich bei geeigneter Ausgestaltung der Spritzgießform während des Spritzgießens des Kolbeninnenteils einfach mit ausbilden.

Den jeweiligen Einsatzerfordernissen entsprechend können des weiteren mehrere Rastbereiche am Kolbeninnenteil mit jeweils zugeordneten Hinterschnittbereichen am Kolbenaußenteil vorgesehen sein, die in Richtung des Druckraums im Durchmesser abnehmend stufig versetzt angeordnet sind. Somit können die Auszugskraft weiter erhöht bzw. die Haltekräfte auf mehrere Stellen im Kolben verteilt werden, so daß die einzelnen Hinterschnitte nicht so tief ausfallen müssen. Dabei ist es möglich, die Hinterschnittbereiche verschieden auszugestalten, namentlich so, daß die Hinterschnittbereiche unterschiedlich stark hinterschnitten ausgebildet sind, wobei sich der am stärksten hinterschnitten ausgebildete Hinterschnittbereich vorzugsweise an einer Stelle befindet, welche in axialer Richtung des Kolbens beabstandet ist von einer Lauffläche, die für wenigstens ein im Zylindergehäuse sitzendes Dichtelement außenumfangsseitig am Kolbenaußenteil vorgesehen ist. Somit wird auf einfache Weise gewährleistet, daß die bei der Zwangsentformung auftretende Verformung des Kolbenaußenteils die Geometrie, genauer die gewünschte Glätte der Lauffläche des Kolbens nicht beeinträchtigt.

Weiterhin kann das Kolbeninnenteil wenigstens einen an seiner Mantelfläche ununterbrochen oder unterbrochen umlaufenden, im Längsschnitt gesehen nasenförmigen Vorsprung aufweisen, der in axialer Richtung des Kolbens vom Rastbereich beabstandet ist und zur Zentrierung des Kolbeninnenteils im Kolbenaußenteil dient. Auch ein solcher nasenförmiger Vorsprung kann bei geeigneter Gestaltung der Spritzgießform während des Spritzgießens des Kolbeninnenteils gleich mit ausgebildet werden. Die Durchmesserdimensionierung des nasenförmigen Vorsprungs kann hierbei derart sein, daß ein Übermaß bezüglich der im montierten Zustand des Kolbens angrenzenden Fläche des Kolbenaußenteils besteht. Dies schafft ggf. einen weiteren Preßsitzbereich zwischen Kolbeninnenteil und Kolbenaußenteil bzw. eine weitere Reibschlußüberlagerung, der/die für noch höhere Auszugskräfte sorgen kann, soweit denn erforderlich.

Grundsätzlich kann der Kolben mittels des Kolbenaußenteils im Zylindergehäuse geführt sein. Bevorzugt ist jedoch eine Ausgestaltung, bei der der Kolben mittels des Kolbeninnenteils im Zylindergehäuse geführt ist. Eine solche Ausgestaltung hat den Vorteil, daß insbesondere die Lauffläche am Kolbenaußenteil keine Führungsfunktion hat, mithin für einen dichten Eingriff mit dem/den Dichtelement(en) im Zylindergehäuse glatt bleibt. Hierbei kann das Kolbeninnenteil zweckmäßig mit einem Ringbund versehen sein, der nach radial außen über den Außenumfang des Kolbenaußenteils übersteht und der Führung des Kolbens im Zylindergehäuse dient.

Ferner kann sich an den Boden des Kolbenaußenteils in Richtung des Druckraums ein Fortsatz anschließen, der der Befestigung eines Signalelements, insbesondere eines Ringmagneten am Kolben dient. Auch ein solcher Fortsatz kann bei geeigneter Ausgestaltung der Spritzgießform auf einfache Weise beim Spritzgießen des Kolbenaußenteils mit ausgebildet werden, so daß der Kolben einen integrierten Träger für das Signalelement erhält und somit weitere Funktionen wahrnehmen kann. In zweckmäßiger Ausgestaltung kann der Fortsatz aus einer Mehrzahl von Federarmen bestehen, die in etwa mittig mit einem Anschlag für das Signalelement versehen und am freien Ende hakenartig ausgebildet sind, um das Signalelement zu hintergreifen, so daß das Signalelement einfach auf den Kolben, genauer dessen Fortsatz aufgeschnappt werden kann.

Als Werkstoff für das Kolbenaußenteil kommt in Betracht ein Thermoplast, vorzugsweise ein glasfaserverstärkter oder mineralgefüllter Polyphtalamid (PPA). Dieser bedarf im Gegensatz zu dem im eingangs geschilderten Stand der Technik als Werkstoff für das Kolbenaußenteil vorgeschlagenen Duroplast, der schon infolge seiner Härte und Sprödheit zur spanlosen Ausbildung des erfindungsgemäßen Hinterschnittbereichs mittels Zwangsentformung ungeeignet ist, keiner mechanischen Nachbearbeitung. Auch für das Kolbeninnenteil kommt schließlich als Werkstoff zweckmäßig ein Thermoplast, vorzugsweise ein glasfaserverstärkter Polyamid (PA) in Betracht.

### KURZE BESCHREIBUNG DER ZEICHNUNGEN

Im folgenden wird die Erfindung anhand eines bevorzugten Ausführungsbeispiels unter Bezugnahme auf die beigefügten, teilweise schematischen Zeichnungen näher erläutert. In den Zeichnungen zeigen:
- Fig. 1: eine Seitenansicht eines erfindungsgemäßen Geberzylinders für eine hydraulische Kupplungsbetätigung für Kraftfahrzeuge,
- Fig. 2: eine gegenüber der Fig. 1 im Maßstab vergrößerte, abgebrochene Schnittansicht des Geberzylinders entsprechend der Schnittverlaufslinie II-II in Fig. 1, die insbesondere einen mehrteilig aus Kunststoff spritzgegossenen Kolben in seiner Grundstellung zeigt, mit einem einen Druckraum im Geberzylinder begrenzenden Kolbenaußenteil und einem darin befestigten Kolbeninnenteil, an dem eine Kolbenstange als Betätigungselement angelenkt ist,
- Fig. 3: eine abgebrochene Schnittansicht der aus Kolbenaußenteil, Kolbeninnenteil und Kolbenstange bestehenden Baugruppe gemäß Fig. 2, entsprechend der Schnittverlaufslinie III-III in Fig. 2,
- Fig. 4: eine vergrößerte Ansicht des Details IV in Fig. 3, der weitere Einzelheiten zu einer Schnappverbindung zwischen Kolbeninnenteil und Kolbenaußenteil zu entnehmen sind, die aus einem elastisch einfederbaren Rastbereich am Kolbeninnenteil und einem zugeordneten Hinterschnittbereich am Kolbenaußenteil gebildet ist,
- Fig. 5: eine vergrößerte Ansicht des Details V in Fig. 3, die weitere Einzelheiten zu einem umlaufenden nasenförmigen Zentriervorsprung am Kolbeninnenteil zeigt,
- Fig. 6: die aus Kolbenaußenteil, Kolbeninnenteil und Kolbenstange bestehende Baugruppe gemäß Fig. 3 in einer perspektivischen Explosionsdarstellung, vor der Montage dieser Baugruppe,
- Fig. 7: eine Längsschnittansicht des Kolbenaußenteils gemäß Fig. 6,
- Fig. 8: eine Seitenansicht des Kolbeninnenteils gemäß Fig. 6,
- Fig. 9: eine Draufsicht auf das Kolbeninnenteil gemäß Fig. 6 von oben in Fig. 8,
- Fig. 10: eine Schnittansicht des Kolbeninnenteils gemäß Fig. 6 entsprechend der Schnittverlaufslinie X-X in Fig. 8 in einem gegenüber der Fig. 8 vergrößerten Maßstab,
- Fig. 11: eine vergrößerte Ansicht des Details XI in Fig. 8, die insbesondere einen Durchbruch unterhalb bzw. radial innerhalb des Rastbereichs am Kolbeninnenteil zeigt, und
- Fig. 12: bis 15 prinzipielle Darstellungen des Spritzgießwerkzeugs zur Herstellung des Kolbenaußenteils in aufeinanderfolgenden Arbeitsphasen, die insbesondere veranschaulichen, wie beim Spritzgießen des Kolbenaußenteils Hinterschnittbereiche an dessen Innenumfang durch Zwangsentformung des Kolbenaußenteils ausgebildet werden.

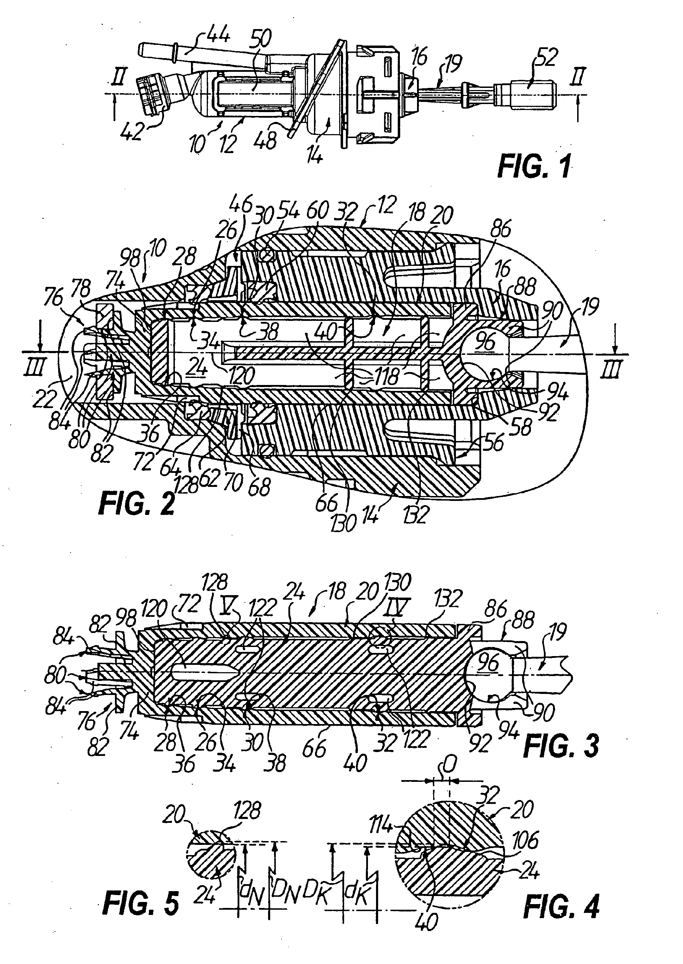

In den Fig. 1 bis 5, die den Geberzylinder bzw. dessen Kolben im montierten Zustand zeigen, sind die einzelnen Teile im übrigen insbesondere zur Vereinfachung der Darstellung in ihrem unverformten Zustand gezeigt. Soweit die einzelnen Teile hier überlappend dargestellt sind, liegen sie also in Wirklichkeit flächig aneinander an.

### DETAILLIERTE BESCHREIBUNG DES AUSFÜHRUNGSBEISPIELS

Die Fig. 1 und 2 zeigen einen Geberzylinder 10 für eine hydraulische Kupplungsbetätigung für Kraftfahrzeuge im nicht angeschlossenen, unbetätigten Zustand. Der Geberzylinder 10 weist allgemein ein zweiteiliges Zylindergehäuse 12 aus Kunststoff mit einem hohlen Gehäusegrundkörper 14 und einem darin eingesetzten Gehäuseeinsatz 16, einen insgesamt mit 18 bezifferten Kolben sowie eine Kolbenstange 19 als Betätigungselement für den Kolben 18 auf. Auch der Kolben 18 ist mehrteilig aus Kunststoff spritzgegossen, mit einem im wesentlichen becherförmigen Kolbenaußenteil 20, das in dem Zylindergehäuse 12 einen Druckraum 22 variabel begrenzt, und einem im Kolbenaußenteil 20 befestigten Kolbeninnenteil 24, das mit der Kolbenstange 19 wirkverbunden ist. Wesentlich ist, daß das Kolbeninnenteil 24 im Kolbenaußenteil 20 formschlüssig mittels einer Schnappverbindung befestigt ist, bei der wenigstens ein -- im dargestellten Ausführungsbeispiel vier -- am Außenumfang des Kolbeninnenteil 24 ausgebildeter, während der Kolbenmontage elastisch einfederbarer Rastbereich 26 (optionale Rastbereiche: 28, 30, 32) in einem zugeordneten Hinterschnittbereich 34 (den optionalen Rastbereichen 28, 30, 32 zugeordnete Hinterschnittbereiche: 36, 38, 40) verrastet ist, der am Innenumfang des Kolbenaußenteils 20 spanlos durch Zwangsentformung beim Spritzgießen des Kolbenaußenteils 20 ausgebildet ist, wie nachfolgend noch näher beschrieben werden wird.

Gemäß Fig. 1 ist das Zylindergehäuse 12, genauer dessen Gehäusegrundkörper 14 an seinem in Fig. 1 linken Ende mit einem Druckanschluß 42 versehen, der mit dem Druckraum 22 kommuniziert und über den der Geberzylinder 10 auf an sich bekannte Weise mit einem Nehmerzylinder (nicht dargestellt) hydraulisch verbunden werden kann. Der Gehäusegrundkörper 14 weist ferner einen Nachlaufanschluß 44 auf, der mit einem Nachlaufbereich 46 (siehe Fig. 2) im Zylindergehäuse 12 kommuniziert und über den der Geberzylinder 10 ebenfalls auf an sich bekannte Weise mit einem Nachlaufbehälter (nicht gezeigt) hydraulisch verbunden werden kann. In Fig. 1 am Zylindergehäuse 12 ferner zu erkennen ist ein Befestigungsflansch 48, mittels dessen der Geberzylinder 10 an einer Spritzwand (nicht dargestellt) im Kraftfahrzeug montiert werden kann, und ein Sensorelement 50, etwa ein Hall-Sensor, als Bestandteil einer Sensoranordnung zur Erfassung des Kolbenhubs. Aus dem in Fig. 1 rechten Ende des Gehäuseeinsatzes 16 schließlich ragt die am Kolben 18 auf noch zu beschreibende Weise angelenkte Kolbenstange 19 heraus, die an ihrem in Fig. 1 rechten Ende mit einem Einsatzteil 52 versehen ist, welches auf an sich bekannte Weise der betätigungswirksamen Anlenkung der Kolbenstange 19 am Kupplungspedal (nicht gezeigt) dient.

Weitere Einzelheiten zum "Innenleben" des Geberzylinders 10 sind der Fig. 2 zu entnehmen. Demgemäß ist zunächst der mittels eines O-Rings 54 gegenüber dem Gehäusegrundkörper 14 abgedichtete Gehäuseeinsatz 16 durch eine allgemein mit 56 bezifferte Schnappverbindung im Gehäusegrundkörper 14 gehalten. Eine innenumfangsseitige Ringschulter 58 am in Fig. 2 rechten Ende des Gehäuseeinsatzes 16 bildet einen Anschlag für den Kolben 18 aus. Am in Fig. 2 linken Ende des Gehäuseeinsatzes 16 ist dieser zur Aufnahme eines elastomeren Sekundärdichtelements 60 ringförmig ausgespart. Zwischen dem Gehäusegrundkörper 14 und dem Gehäuseeinsatz 16 ist ein Stützring 62 angeordnet, der das Sekundärdichtelement 60 von einem Primärdichtelement 64 trennt, welches seinerseits in einer zugeordneten Ringaussparung des Gehäusegrundkörpers 14 sitzt.

Das Primärdichtelement 64 dichtet in einer nicht dargestellten Betriebsstellung des Kolbens 18, in der es sich über einer zylindrischen Lauffläche 66 am Außenumfang des Kolbenaußenteils 20 befindet, den Druckraum 22 gegenüber dem sich zwischen dem Primärdichtelement 64 und dem Sekundärdichtelement 60 befindenden Nachlaufbereich 46 ab, so daß im Druckraum 22 infolge eines Hubs des Kolbens 18 nach links in Fig. 2 ein Druck aufgebaut werden kann. Am Stützring 62 über dessen Umfang verteilt vorgesehene Radialnuten 68 und Axialnuten 70 bilden zusammen mit außerhalb der Lauffläche 66 liegenden, ebenfalls über den Umfang verteilten Axialnuten 72 am druckraumseitigen Ende des Kolbenaußenteils 20 eine Nachlaufeinrichtung, die in der in Fig. 2 gezeigten Grundstellung des Kolbens 18 den Druckraum 22 unter der Dichtkontur des Primärdichtelements 64 hinweg mit dem Nachlaufbereich 46 verbindet, um einen Druckausgleich zwischen dem Druckraum 22 und dem Nachlaufbereich 46 zu schaffen, einen Nachlauf von Hydraulikflüssigkeit vom Nachlaufbereich 46 in den Druckraum 22 zu gestatten und ggf. ein Entweichen von Luft aus dem Druckraum 22 über den Nachlaufbereich 46 zu ermöglichen. Das Sekundärdichtelement 60 schließlich liegt mit seiner Dichtkontur stets an der Lauffläche 66 des Kolbens 18 an, um den Nachlaufbereich 46 zur Atmosphäre bzw. Umgebung hin abzudichten.

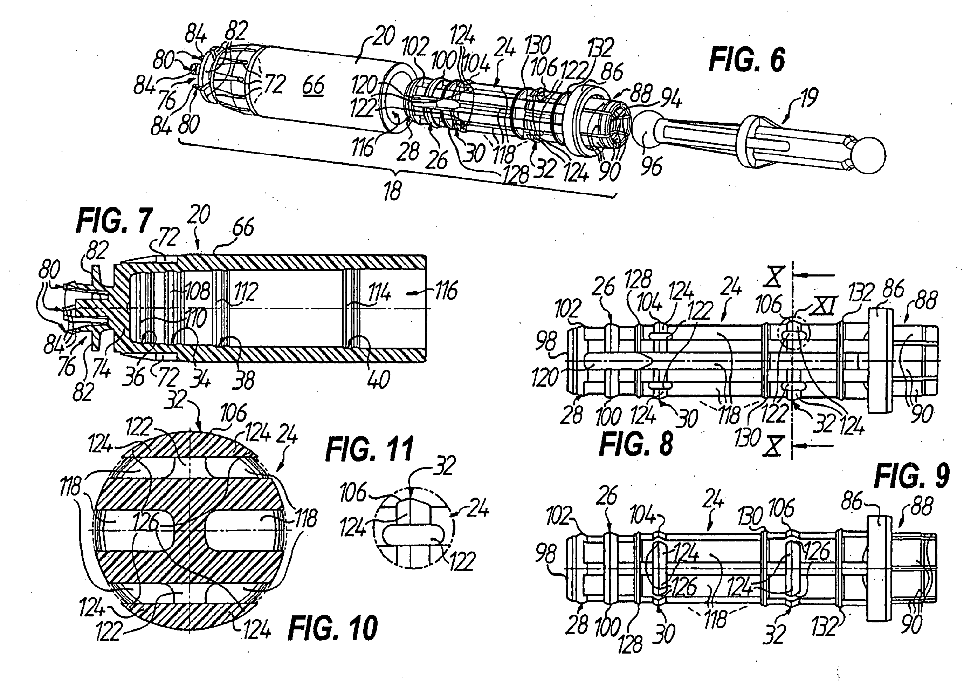

Gemäß den Fig. 2, 3, 6 und 7 schließt sich an einen druckraumseitigen Boden 74 des Kolbenaußenteils 20 in Richtung des Druckraums 22 ein Fortsatz 76 an, der der Befestigung eines Ringmagneten 78 (siehe Fig. 2) als Signalelement der Sensoranordnung dient, das mit dem Sensorelement 50 zusammenwirkt. Der Fortsatz 76 ist mehrfach geschlitzt bzw. besteht aus einer Mehrzahl von Federarmen 80, die jeweils in etwa mittig mit einem Anschlag 82 (unterbrochener Ringbund gemäß Fig. 6) für den Ringmagnet 78 versehen und am freien Ende 84 hakenartig ausgebildet sind, um den Ringmagnet 78 nach radial außen zu hintergreifen. Es ist ersichtlich, daß der Ringmagnet 78 zur Montage am Kolben 18 somit in der Art einer Schnappverbindung auf den Fortsatz 76 am Kolbenaußenteil 20 aufgeschnappt werden kann.

Den Fig. 2 und 3 ist ferner zu entnehmen, wie die Kolbenstange 19 am Kolben 18 angelenkt ist. Am vom Druckraum 22 abgewandten Ende weist der Kolben 18, genauer das Kolbeninnenteil 24 zunächst einen Ringbund 86 auf, an den sich ein hülsenartiger Fortsatz 88 anschließt. Auch dieser Fortsatz 88 ist zur Ausbildung einer Mehrzahl von Federarmen 90 mehrfach geschlitzt. Innenumfangsseitig sind die Federarme 90 so geformt, daß sie zusammen mit einer kugelkalottenförmigen Aussparung 92 im Kolbeninnenteil 24 einen hinterschnittenen Kugelsitz 94 zur Aufnahme eines Kugelkopfes 96 am zylinderseitigen Ende der Kolbenstange 19 ausbilden. Es ist ersichtlich, daß der Kugelkopf 96 zur gelenkigen Verbindung von Kolben 18 und Kolbenstange 19 in der Art einer Schnappverbindung in den Kugelsitz 94 am Kolbeninnenteil 24 eingerastet werden kann. In der Grundstellung des Kolbens 18, in welcher der Ringbund 86 des Kolbeninnenteils 24 gemäß Fig. 2 an der Ringschulter 58 des Gehäuseeinsatzes 16 anliegt, ist der Kugelkopf 96 der Kolbenstange 19 gegen ein Herausziehen aus dem Kugelsitz 94 am Kolbeninnenteil 24 dadurch gesichert, daß der Fortsatz 88 eng vom Gehäuseeinsatz 16 umgeben ist, so daß die einzelnen Federarme 90 nicht nach radial außen auffedern können.

Im übrigen dient der Ringbund 86 des Kolbeninnenteils 24 auch der Führung des Kolbens 18 im Zylindergehäuse 12, indem der Ringbund 86 nach radial außen über den Außenumfang des Kolbenaußenteils 20, genauer über die Lauffläche 66 am Kolbenaußenteil 20 geringfügig übersteht, um mit der Innenumfangsfläche des Gehäuseeinsatzes 16 in gleitenden Kontakt zu kommen.

Den Fig. 3 bis 11 sind weitere Details zur Ausbildung des Kolbenaußenteils 20 und des Kolbeninnenteils 24 zu entnehmen, und insbesondere dazu, wie das Kolbeninnenteil 24 im Kolbenaußenteil 20 befestigt ist. Zunächst ist in Fig. 3, wie auch in Fig. 2 zu erkennen, daß im montierten Zustand des Kolbens 18 das Kolbeninnenteil 24 mit einer dem Druckraum 22 zugewandten Stirnfläche 98 am Boden 74 des Kolbenaußenteils 20 anliegt, während der Ringbund 86 des Kolbeninnenteils 24 geringfügig vom kolbenstangenseitigen Ende des Kolbenaußenteils 20 beabstandet ist. Über die Kolbenstange 19 in Richtung des Druckraums 22 in den Kolben 18 eingeleitete Kräfte werden somit direkt über das Kolbeninnenteil 24 auf den Boden 74 des Kolbenaußenteils 20 übertragen, ohne daß diese Kräfte die Befestigungs- bzw. Verbindungsstellen zwischen Kolbeninnenteil 24 und Kolbenaußenteil 20 belasten würden.

Es wurde bereits erwähnt, daß im dargestellten Ausführungsbeispiel mehrere, nämlich vier Rastbereiche 26, 28, 30, 32 am Kolbeninnenteil 24 mit jeweils zugeordneten Hinterschnittbereichen 34, 36, 38, 40 am Kolbenaußenteil 20 vorgesehen sind. Diese sind, wie in den Fig. 2, 3, 6, 7, 8 und 9 zu erkennen ist, in Richtung des Druckraums 22 im Durchmesser abnehmend stufig versetzt, d.h. axial voneinander beabstandet angeordnet. Den Rastbereichen 26, 28, 30, 32 ist gemein, daß sie mit einer im Längsschnitt gesehen konvexen, nach außen gewölbten Kontur 100, 102, 104, 106 (siehe insbesondere die Fig. 6, 8 und 9) über die Mantelfläche des Kolbeninnenteils 24 nach radial außen überstehen, während den Hinterschnittbereichen 34, 36, 38, 40 gemein ist, daß sie mit einer im Längsschnitt gesehen konkaven, nach innen gewölbten Kontur 108, 110, 112, 114 (siehe insbesondere die Fig. 7) in der Innenumfangsfläche des Kolbenaußenteils 20 ausgebildet sind, die zusammen mit dem Boden 74 einen Aufnahmebereich 116 für das Kolbeninnenteil 24 im Kolbenaußenteil 20 begrenzt.

Am Beispiel der Eingriffspaarung Rastbereich 32 / Hinterschnittbereich 40 ist in Fig. 4 gezeigt, daß die räumliche Relativlage der einander zugeordneten konvexen und konkaven Konturen am Kolbeninnenteil 24 bzw. Kolbenaußenteil 20 derart gewählt ist, daß sich im montierten Zustand des Kolbens 18 eine axiale und radiale Verspannung von Kolbeninnenteil 24 und Kolbenaußenteil 20 ergibt. So weist die konvexe Kontur 106 des Rastbereichs 32 einen maximalen Durchmesser D_{K} auf, der vor der Montage des Kolbeninnenteils 24 im Kolbenaußenteil 20 geringfügig größer ist als der maximale Durchmesser d_{K} der konkaven Kontur 114 des zugeordneten Hinterschnittbereichs 40, was hier für die radiale Verspannung von Kolbeninnenteil 24 und Kolbenaußenteil 20 sorgt. Ferner weist die konkave Kontur 114 des Hinterschnittbereichs 40 bezüglich der konvexen Kontur 106 des zugeordneten Rastbereichs 32 im montierten Zustand des Kolbens 18 einen axialen Versatz O in Richtung des Druckraums 22 auf, woraus sich hier die axiale Verspannung zwischen Kolbeninnenteil 24 und Kolbenaußenteil 20 ergibt.

Die Ausgestaltung der Hinterschnittbereiche 34, 36, 38, 40 kann den jeweiligen Halteerfordernissen entsprechend ferner so getroffen sein, daß die Hinterschnittbereiche 34, 36, 38, 40 unterschiedlich stark hinterschnitten ausgebildet sind, was in den Figuren wegen des kleinen Maßstabs derselben nicht zu erkennen ist. Um die Glätte der Lauffläche 66 am Kolbenaußenteil 20 nicht zu beeinträchtigen, sollten sich dann die am stärksten hinterschnitten ausgebildeten Hinterschnittbereiche an einer Stelle befindet, die von der Lauffläche 66 in axialer Richtung des Kolbens 18 beabstandet ist. Dies trifft im dargestellten Ausführungsbeispiel für die Hinterschnittbereiche 34 und 36 zu, wie insbesondere in Fig. 3 zu sehen ist.

Einen Einfluß auf die maximale Größe des jeweiligen Hinterschnitts hat natürlich auch die Elastizität bzw. das Federvermögen des jeweils zugeordneten Rastbereichs 26, 28, 30, 32. Besagtes Federvermögen ist zum einen vom Werkstoff des Kolbeninnenteils 24 abhängig, für das bevorzugt ein glasfaserverstärkter Polyamid (PA), wie z.B. PA 66 mit einem Glasfaseranteil von 35% zum Einsatz kommt. Zum anderen kann dieses Federvermögen durch die geometrische Gestaltung des Kolbeninnenteils 24 beeinflußt werden; insbesondere den Fig. 3, 6 und 8 bis 11 sind diesbezügliche Einzelheiten zu entnehmen.

So weist das Kolbeninnenteil 24 neben einer Mehrzahl von Aussparungen 118, die sich ausgehend von der Mantelfläche des Kolbeninnenteils 24 nach radial innen erstrecken, um für eine spritzgießgerechte, im wesentlichen konstante Wandstärke des Kolbeninnenteils 24 zu sorgen -- vgl. insbesondere die Fig. 2 und 10; in den übrigen Figuren sind die Aussparungen 118 der besseren Übersichtlichkeit halber nicht sämtlich mit Bezugszeichen versehen -- in axialer Richtung des Kolbens 18 gesehen auf Höhe der Rastbereiche 26, 30 und 32 zur Erhöhung der Elastizität derselben auch langlochförmige Durchbrüche 120, 122 auf. Während der dem Rastbereich 26 zugeordnete, größte Durchbruch 120 in radialer Richtung gesehen (vgl. die Fig. 3 und 8) mittig im Kolbeninnenteil 24 verläuft, sind die demgegenüber kleineren, dem Rastbereich 30 bzw. 32 jeweils paarweise zugeordneten Durchbrüche 122 in bezüglich einer Mittelebene des Kolbens 18 spiegelsymmetrischer Anordnung im Kolbeninnenteil 24 ausgebildet, und zwar so, daß sie etwas näher zur Mantelfläche des Kolbeninnenteils 24 als zur Mittelebene des Kolbens 18 liegen.

Darüber hinaus weisen gemäß insbesondere den Fig. 8, 9 und 10 die Rastbereiche 30 und 32 jeweils vier sich im wesentlichen in Umfangsrichtung des Kolbeninnenteils 24 erstreckende Federarme 124 auf. Die jeweils einem Rastbereich 30 bzw. 32 zugehörigen Federarme 124 sind hierbei in Bezug zu zwei senkrecht zueinander verlaufenden Mittelebenen des Kolbens 18 paarweise spiegelsymmetrisch angeordnet, wie in Fig. 10 zu erkennen ist. Die Fig. 10 zeigt auch, daß die freien Enden 126 der Federarme 124 vor der Montage des Kolbeninnenteils 24 im Kolbenaußenteil 20 radial einfederbar über den Außenumfang des Rastbereichs 30 bzw. 32 im übrigen nach radial außen überstehen (siehe den radialen Überstand bezüglich der gestrichelten Linie in Fig. 10).

Schließlich sind gemäß den Fig. 2, 3, 5, 6, 8 und 9 am Kolbeninnenteil 24, genauer dessen Mantelfläche noch drei im Längsschnitt gesehen (vgl. insbesondere Fig. 5) nasenförmige Vorsprünge 128, 130, 132 vorgesehen, die auf der Mantelfläche des Kolbeninnenteils 24 ununterbrochen (Vorsprünge 130, 132) bzw. durch den Durchbruch 120 unterbrochen (Vorsprung 128) umlaufen und zur Zentrierung des Kolbeninnenteils 24 im Kolbenaußenteil 20 dienen. Die nasenförmigen Vorsprünge 128, 130, 132 sind in axialer Richtung des Kolbens 18 von den Rastbereichen 26, 28, 30, 32 beabstandet angeordnet, wobei der Vorsprung 128 zwischen den Rastbereichen 26 und 30, der Vorsprung 130 zwischen den Rastbereichen 30 und 32, näher am Rastbereich 32, und der Vorsprung 132 zwischen dem Rastbereich 32 und dem Ringbund 86 ausgebildet ist.

Exemplarisch für die nasenförmigen Vorsprünge 128, 130, 132 ist in Fig. 5 der Vorsprung 128 vergrößert dargestellt. Demgemäß ist der maximale Durchmesser D_{N} des Vorsprungs 128 im nicht montierten Zustand des Kolbeninnenteils 24 geringfügig größer als der Durchmesser d_{N} der im montierten Zustand des Kolbens 18 angrenzenden Innenfläche des Kolbenaußenteils 20, wodurch hier ein Preßsitz entsteht, der dem Formschluß der Eingriffspaarungen zwischen den Rastbereichen 26, 28, 30, 32 und den jeweils zugeordneten Hinterschnittbereichen 34, 36, 38, 40 noch einen weiteren Kraft- bzw. Reibschluß überlagert.

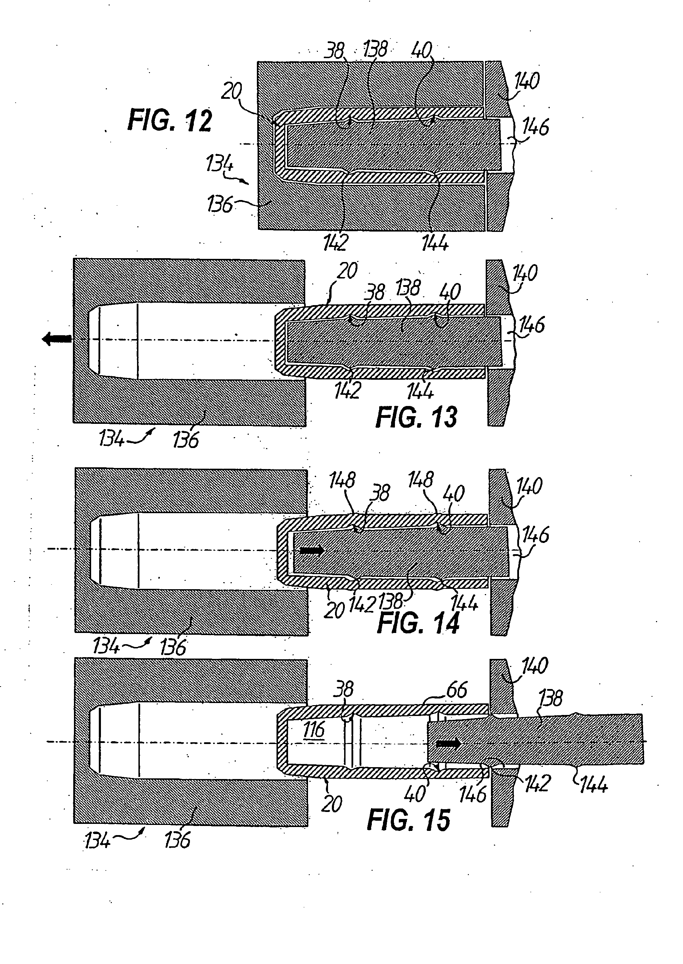

Abschließend soll unter ergänzender Bezugnahme auf die Fig. 12 bis 15 noch das erfindungsgemäße Verfahren zur Herstellung bzw. Montage des vorbeschriebenen Kolbens 18 des Geberzylinders 10 erläutert werden. Dieses Verfahren umfaßt im Kern die folgenden Schritte:
Spritzgießen des Kolbeninnenteils 24 aus Kunststoff;
Spritzgießen des Kolbenaußenteils 20 aus Kunststoff; und
Einführen des Kolbeninnenteils 24 in das Kolbenaußenteil 20 bis die Rastbereiche 26, 28, 30, 32 am Außenumfang des Kolbeninnenteils 24 nach elastischer Einfederung im jeweils zugeordneten Hinterschnittbereich 34, 36, 38, 40 des Kolbenaußenteils 20 zur Ausbildung der Schnappverbindung verrasten.

Ein für das Spritzgießen des Kolbeninnenteils 24 geeigneter Kunststoff wurde weiter oben schon erwähnt. Gleichfalls wurde schon angesprochen, daß das Kolbeninnenteil 24 in einem einzigen Spritzgießvorgang als "werkzeugfallendes" Teil hergestellt wird, welches ohne die Notwendigkeit einer mechanischen Nachbearbeitung nach Entnahme aus der Spritzgießform schon seine endgültige Geometrie gemäß den Fig. 6 und 8 bis 11, insbesondere die fertig ausgebildeten Rastbereiche 26, 28, 30, 32 aufweist.

Das Spritzgießen des becherförmigen Kolbenaußenteils 20 erfolgt unabhängig vom Spritzgießen des Kolbeninnenteils 24 davor, gleichzeitig oder danach. Als Werkstoff für das Kolbenaußenteil 20 kommt bevorzugt ein glasfaserverstärkter oder noch besser mineralgefüllter Polyphtalamid (PPA) zum Einsatz, wie z.B. ein Grivory^{®} HT - Thermoplast, hergestellt und vertrieben von der Firma EMS-Grivory. Die Fig. 12 bis 15 veranschaulichen nun in einer vereinfachten, schematischen Darstellungsweise, wie beim Spritzgießen des Kolbenaußenteils 20 zugleich z.B. die Hinterschnittbereiche 38 und 40 an dessen Innenumfang mit ausgebildet werden; in diesen Figuren wurden dem Fachmann hinlänglich bekannte Details wie Dichtungen, Materialzuführöffnungen, Handhaben, etc. zur Vereinfachung der Darstellung weggelassen.

Die Fig. 12 zeigt das geschlossene Spritzgießwerkzeug 134, welches allgemein eine einteilige Außenform 136, einen einteiligen Werkzeugkern 138 zur Ausbildung des Aufnahmebereichs 116 im Kolbenaußenteil 20 und eine Schließhälfte 140 aufweist, wobei der Kunststoff für das Kolbenaußenteil 20 bereits in einem plastisch verformbaren Zustand in das Spritzgießwerkzeug 134 eingespritzt wurde. Deutlich zu erkennen ist schon die Becherform des Kolbenaußenteils 20. Ferner ist zu sehen, daß der Werkzeugkern 138 an seinem Außenumfang erhabene Konturen 142, 144 aufweist, die eine zu den Hinterschnittbereichen 38 bzw. 40 im wesentlichen komplementäre Geometrie besitzen und sich am Innenumfang des Kolbenaußenteils 20 abformen, um dort die Hinterschnittbereiche 38 bzw. 40 auszubilden.

Sodann wird die Außenform 136 gemäß Fig. 13 vom Rest des Spritzgießwerkzeugs 134 axial abgezogen (siehe den Pfeil auf der linken Seite in Fig. 13), wobei das Werkstück 20 gehalten durch die erhabenen Konturen 142, 144 auf dem Werkzeugkern 138 verbleibt.

Danach wird der Werkzeugkern 138 aus dem Kolbenaußenteil 20, welches sich aufgrund der im Spritzteil verbleibenden Massetemperatur in einem teilelastischen Zustand befindet, durch eine Öffnung 146 in der Schließhälfte 140 hindurch herausgezogen (siehe die nach rechts gerichteten Pfeile in den Fig. 14 und 15), wobei sich das Kolbenaußenteil 20 mit seiner in den Fig. 14 und 15 rechten Stirnfläche an der Schließhälfte 140 abstützt. Hierbei wird die Geometrie der Hinterschnittbereiche 38 bzw. 40 am Innenumfang des Kolbenaußenteils 20 zwangsentformt, wobei es zunächst zu einer wenigstens teilelastischen Verformung des Kolbenaußenteils 20 mit Ausbeulungen 148 an dessen Außenumfang kommt (Fig. 14), die sich mit Erkalten des entformten Kolbenaußenteils 20 sodann wieder zurückbilden (Fig. 15). Es resultiert das Kolbenaußenteil 20 mit den fertigen Hinterschnittbereichen 38 bzw. 40 am Innenumfang und der glatten, formteilungsgratfreien Lauffläche 66 am Außenumfang.

Schließlich werden Kolbenaußenteil 20 und Kolbeninnenteil 24 ohne die Notwendigkeit einer winkelmäßigen Ausrichtung zueinander einfach durch Ineinanderschieben miteinander verrastet, so daß die vorbeschriebene Schnappverbindung entsteht.

Es wird ein Hydraulikzylinder, insbesondere Geberzylinder für eine hydraulische Kupplungs- oder Bremsbetätigung für Kraftfahrzeuge offenbart, umfassend ein Zylindergehäuse, einen Kolben und ein Betätigungselement. Der Kolben ist mehrteilig aus Kunststoff spritzgegossen, mit einem becherförmigen Kolbenaußenteil, das in dem Zylindergehäuse einen Druckraum variabel begrenzt, und einem im Kolbenaußenteil befestigten Kolbeninnenteil, das mit dem Betätigungselement wirkverbunden ist. Eine Besonderheit dieses Kolbens besteht darin, daß das Kolbeninnenteil im einseitig geschlossenen Kolbenaußenteil formschlüssig mittels einer Schnappverbindung befestigt ist, bei der wenigstens ein am Außenumfang des Kolbeninnenteils ausgebildeter, während der Kolbenmontage elastisch einfederbarer Rastbereich in einem zugeordneten Hinterschnittbereich verrastet ist, der am Innenumfang des Kolbenaußenteils spanlos durch Zwangsentformung beim Spritzgießen desselben ausgebildet ist. Der derart ausgebildete Kolben kann besonders einfach hergestellt/montiert werden, wozu ebenfalls ein Verfahren vorgeschlagen wird, und vermag außerdem auch im Verhältnis hohen Auszugskräften ohne Beschädigung zu widerstehen.

### BEZUGSZEICHENLISTE

- 10: Geberzylinder
- 12: Zylindergehäuse
- 14: Gehäusegrundkörper
- 16: Gehäuseeinsatz
- 18: Kolben
- 19: Kolbenstange
- 20: Kolbenaußenteil
- 22: Druckraum
- 24: Kolbeninnenteil
- 26: Rastbereich
- 28: Rastbereich
- 30: Rastbereich
- 32: Rastbereich
- 34: Hinterschnittbereich
- 36: Hinterschnittbereich
- 38: Hinterschnittbereich
- 40: Hinterschnittbereich
- 42: Druckanschluß
- 44: Nachlaufanschluß
- 46: Nachlaufbereich
- 48: Befestigungsflansch
- 50: Sensorelement
- 52: Einsatzteil
- 54: O-Ring
- 56: Schnappverbindung
- 58: Ringschulter
- 60: Sekundärdichtelement
- 62: Stützring
- 64: Primärdichtelement
- 66: Lauffläche
- 68: Radialnut
- 70: Axialnut
- 72: Axialnut
- 74: Boden
- 76: Fortsatz
- 78: Ringmagnet
- 80: Federarm
- 82: Anschlag
- 84: Ende
- 86: Ringbund
- 88: Fortsatz
- 90: Federarm
- 92: Aussparung
- 94: Kugelsitz
- 96: Kugelkopf
- 98: Stirnfläche
- 100: konvexe Kontur
- 102: konvexe Kontur
- 104: konvexe Kontur
- 106: konvexe Kontur
- 108: konkave Kontur
- 110: konkave Kontur
- 112: konkave Kontur
- 114: konkave Kontur
- 116: Aufnahmebereich
- 118: Aussparung
- 120: Durchbruch
- 122: Durchbruch
- 124: Federarm
- 126: freies Ende
- 128 nasenförmiger: Vorsprung
- 130: nasenförmiger Vorsprung
- 132: nasenförmiger Vorsprung
- 134: Spritzgießwerkzeug
- 136: Außenform
- 138: Werkzeugkern
- 140: Schließhälfte
- 142: erhabene Kontur

- 144: erhabene Kontur
- 146: Öffnung
- 148: Ausbeulung

- D_{K}: Durchmesser der konvexen Kontur
- d_{K}: Durchmesser der konkaven Kontur
- D_{N}: Durchmesser des nasenförmigen Vorsprungs
- d_{N}: Durchmesser der daran angrenzenden Fläche
- O: Axialversatz der einander zugeordneten Konturen

## Patentansprüche

1. Hydraulikzylinder, insbesondere Geberzylinder (10) für eine hydraulische Kupplungs- oder Bremsbetätigung für Kraftfahrzeuge, umfassend ein Zylindergehäuse (12), einen Kolben (18) und ein Betätigungselement (19), wobei der Kolben (18) mehrteilig aus Kunststoff spritzgegossen ist, mit einem becherförmigen Kolbenaußenteil (20), das in dem Zylindergehäuse (12) einen Druckraum (22) variabel begrenzt, und einem im Kolbenaußenteil (20) befestigten Kolbeninnenteil (24), das mit dem Betätigungselement (19) wirkverbunden ist, **dadurch gekennzeichnet, daß** das Kolbeninnenteil (24) im Kolbenaußenteil (20) formschlüssig mittels einer Schnappverbindung befestigt ist, bei der wenigstens ein am Außenumfang des Kolbeninnenteils (24) ausgebildeter, während der Kolbenmontage elastisch einfederbarer Rastbereich (26, 28, 30, 32) in einem zugeordneten Hinterschnittbereich (34, 36, 38, 40) verrastet ist, der am Innenumfang des Kolbenaußenteils (20) spanlos durch Zwangsentformung beim Spritzgießen desselben ausgebildet ist.

2. Hydraulikzylinder nach Anspruch 1, **dadurch gekennzeichnet, daß** das Kolbenaußenteil (20) einen dem Druckraum (22) zugewandten Boden (74) aufweist, an dem das im Kolbenaußenteil (20) befestigte Kolbeninnenteil (24) mit einer dem Druckraum (22) zugewandten Stirnfläche (98) anliegt.

3. Hydraulikzylinder nach Anspruch 1 oder 2, **dadurch gekennzeichnet, daß** der Rastbereich (26, 28, 30, 32) mit einer im Längsschnitt gesehen konvexen Kontur (100, 102, 104, 106) über eine Mantelfläche des Kolbeninnenteils (24) nach radial außen übersteht.

4. Hydraulikzylinder nach einem der vorhergehenden Ansprüche, **dadurch gekennzeichnet, daß** der Hinterschnittbereich (34, 36, 38, 40) mit einer im Längsschnitt gesehen konkaven Kontur (108, 110, 112, 114) in einer Innenfläche des Kolbenaußenteils (20) ausgebildet ist.

5. Hydraulikzylinder nach Anspruch 3 und 4, **dadurch gekennzeichnet, daß** die konvexe Kontur (100, 102, 104, 106) des Rastbereichs (26, 28, 30, 32) einen maximalen Durchmesser (D_{K}) aufweist, der vor der Montage des Kolbeninnenteils (24) im Kolbenaußenteil (20) geringfügig größer ist als der maximale Durchmesser (d_{K}) der konkaven Kontur (108, 110, 112, 114) des zugeordneten Hinterschnittbereichs (34, 36, 38, 40).

6. Hydraulikzylinder nach Anspruch 3 und 4 oder nach Anspruch 5, **dadurch gekennzeichnet, daß** die konkave Kontur (108, 110, 112, 114) des Hinterschnittbereichs (34, 36, 38, 40) bezüglich der konvexen Kontur (100, 102, 104, 106) des zugeordneten Rastbereichs (26, 28, 30, 32) im montierten Zustand des Kolbens (18) einen axialen Versatz (0) in Richtung des Druckraums (22) aufweist.

7. Hydraulikzylinder nach einem der vorhergehenden Ansprüche, **dadurch gekennzeichnet, daß** das Kolbeninnenteil (24) in axialer Richtung des Kolbens (18) gesehen auf Höhe des Rastbereichs (26, 30, 32) zur Erhöhung der Elastizität desselben mit wenigstens einem Durchbruch (120, 122) versehen ist.

8. Hydraulikzylinder nach einem der vorhergehenden Ansprüche, **dadurch gekennzeichnet, daß** der Rastbereich (30, 32) wenigstens einen sich in Umfangsrichtung des Kolbeninnenteils (24) erstreckenden Federarm (124) aufweist, dessen freies Ende (126) vor der Montage des Kolbeninnenteils (24) im Kolbenaußenteil (20) über den Außenumfang des Rastbereichs (30, 32) im übrigen nach radial außen übersteht.

9. Hydraulikzylinder nach einem der vorhergehenden Ansprüche, **dadurch gekennzeichnet, daß** mehrere Rastbereiche (26, 28, 30, 32) am Kolbeninnenteil (24) mit jeweils zugeordneten Hinterschnittbereichen (34, 36, 38, 40) am Kolbenaußenteil (20) vorgesehen sind, die in Richtung des Druckraums (22) im Durchmesser abnehmend stufig versetzt angeordnet sind.

10. Hydraulikzylinder nach Anspruch 9, **dadurch gekennzeichnet, daß** die Hinterschnittbereiche (34, 36, 38, 40) unterschiedlich stark hinterschnitten ausgebildet sind und daß das Kolbenaußenteil (20) außenumfangsseitig eine Lauffläche (66) für wenigstens ein im Zylindergehäuse (12) sitzendes Dichtelement (60, 64) aufweist, wobei sich der am stärksten hinterschnitten ausgebildete Hinterschnittbereich (34) an einer Stelle befindet, die von der Lauffläche (66) in axialer Richtung des Kolbens (18) beabstandet ist.

11. Hydraulikzylinder nach einem der vorhergehenden Ansprüche, **dadurch gekennzeichnet, daß** das Kolbeninnenteil (24) wenigstens einen an seiner Mantelfläche ununterbrochen oder unterbrochen umlaufenden, im Längsschnitt gesehen nasenförmigen Vorsprung (128, 130, 132) aufweist, der in axialer Richtung des Kolbens (18) vom Rastbereich (26, 28, 30, 32) beabstandet ist und zur Zentrierung des Kolbeninnenteils (24) im Kolbenaußenteil (20) dient.

12. Hydraulikzylinder nach einem der vorhergehenden Ansprüche, **dadurch gekennzeichnet, daß** der Kolben (18) mittels des Kolbeninnenteils (24) im Zylindergehäuse (12) geführt ist.

13. Hydraulikzylinder nach Anspruch 12, **dadurch gekennzeichnet, daß** das Kolbeninnenteil (24) einen Ringbund (86) aufweist, der nach radial außen über den Außenumfang des Kolbenaußenteils (20) übersteht und der Führung des Kolbens (18) im Zylindergehäuse (12) dient.

14. Hydraulikzylinder nach einem der vorhergehenden Ansprüche, **dadurch gekennzeichnet, daß** sich an den Boden (74) des Kolbenaußenteils (20) in Richtung des Druckraums (22) ein Fortsatz (76) anschließt, der der Befestigung eines Signalelements, insbesondere eines Ringmagneten (78) am Kolben (18) dient.

15. Hydraulikzylinder nach Anspruch 14, **dadurch gekennzeichnet, daß** der Fortsatz (76) aus einer Mehrzahl von Federarmen (80) besteht, die in etwa mittig mit einem Anschlag (82) für das Signalelement (78) versehen und am freien Ende hakenartig ausgebildet sind, um das Signalelement (78) zu hintergreifen.

16. Hydraulikzylinder nach einem der vorhergehenden Ansprüche, **dadurch gekennzeichnet, daß** das Kolbenaußenteil (20) aus einem Thermoplast, vorzugsweise einem glasfaserverstärkten oder mineralgefüllten Polyphtalamid (PPA) besteht.

17. Hydraulikzylinder nach einem der vorhergehenden Ansprüche, **dadurch gekennzeichnet, daß** das Kolbeninnenteil (24) aus einem Thermoplast, vorzugsweise einem glasfaserverstärkten Polyamid (PA) besteht.

18. Verfahren zur Herstellung des Kolbens (18) für einen Hydraulikzylinder (10) nach einem der vorhergehenden Ansprüche, mit den folgenden Schritten:
Spritzgießen des Kolbeninnenteils (24) aus Kunststoff und Ausbilden des wenigstens einen Rastbereichs (26, 28, 30, 32) am Außenumfang des Kolbeninnenteils (24),
Spritzgießen des becherförmigen Kolbenaußenteils (20) aus Kunststoff unter Verwendung eines Werkzeugkerns (138) zur Ausbildung eines Aufnahmebereichs (116) für das Kolbeninnenteil (24), wobei der Werkzeugkern (138) am Außenumfang eine erhabene Kontur (142, 144) zur Ausbildung des Hinterschnittbereichs (34, 36, 38, 40) am Innenumfang des Kolbenaußenteils (20) aufweist und am Ende des Spritzgießvorgangs aus dem Kolbenaußenteil (20) unter wenigstens teilelastischer Verformung des Kolbenaußenteils (20) herausgezogen wird (Zwangsentformung), und
Einführen des Kolbeninnenteils (24) in das Kolbenaußenteil (20) bis der Rastbereich (26, 28, 30, 32) am Außenumfang des Kolbeninnenteils (24) nach elastischer Einfederung im zugeordneten Hinterschnittbereich (34, 36, 38, 40) des Kolbenaußenteils (20) zur Ausbildung der Schnappverbindung verrastet.

19. Verfahren nach Anspruch 18, **dadurch gekennzeichnet, daß** der wenigstens eine Rastbereich (26, 28, 30, 32) am Außenumfang des Kolbeninnenteils (24) beim Spritzgießen desselben ausgebildet wird.

## Claims

1. Hydraulic cylinder, particularly master cylinder (10) for a hydraulic clutch actuation or brake actuation for motor vehicles, comprising a cylinder housing (12), a piston (18) and an actuating element (19), wherein the piston (18) is a multi-part injection-molding of plastics material, with a beaker-shaped piston outer part (20) variably bounding a pressure chamber (22) in the cylinder housing (12), and a piston inner part (24) fastened in the piston outer part (20) and operatively connected with the actuating element (19), **characterized in that** the piston inner part (24) is mechanically positively fastened in the piston outer part (20) by means of a snap connection in which at least one detent region (26, 28, 30, 32), which is formed at the outer circumference of the piston inner part (24) and which can be resiliently sprung in during the piston mounting, is detented in an associated undercut region (34, 36, 38, 40) formed at the inner circumference of the piston outer part (20) without cutting by forced deformation during injection-molding thereof.

2. Hydraulic cylinder according to claim 1, **characterized in that** the piston outer part (20) has a base (74) which faces the pressure chamber (22) and against which the piston inner part (24), which is fastened in the piston outer part (20), bears by an end face (98) facing the pressure chamber (22).

3. Hydraulic cylinder according to claim 1 or 2, **characterized in that** the detent region (26, 28, 30, 32) projects radially outwardly beyond a circumferential surface of the piston inner part (24) by a profile (100, 102, 104, 106) which as seen in a longitudinal section is convex.

4. Hydraulic cylinder according to any one of the preceding claims, **characterized in that** the undercut region (34, 36, 38, 40) is formed in an inner surface of the piston outer part (20) with a profile (108, 110, 112, 114) which as seen in a longitudinal section is concave.

5. Hydraulic cylinder according to claim 3 and 4, **characterized in that** the convex profile (100, 102, 104, 106) of the detent region (26, 28, 30, 32) has a maximum diameter (D_{K}) which before mounting of the piston inner part (24) in the piston outer part (20) is slightly greater than the maximum diameter (d_{K}) of the concave profile (108, 110, 112, 114) of the associated undercut region (34, 36, 38, 40).

6. Hydraulic cylinder according to claim 3 and 4 or according to claim 5, **characterized in that** the concave profile (108, 110, 112, 114) of the undercut region (34, 36, 38, 40) has an axial offset (O) in the direction of the pressure chamber (22) with respect to the convex profile (100, 102, 104, 106) of the associated detent region (26, 28, 30, 32) in the mounted state of the piston (18).

7. Hydraulic cylinder according to any one of the preceding claims, **characterized in that** the piston inner part (24) as seen in the axial direction of the piston (18) is provided at the level of the detent region (26, 30, 32) with at least one passage (120, 122) for increasing the resilience of that region.

8. Hydraulic cylinder according to any one of the preceding claims, **characterized in that** the detent region (30, 32) comprises at least one spring arm (124), which extends in the circumferential direction of the piston inner part (24) and the free end (126) of which before mounting of the piston inner part (24) in the piston outer part (20) protrudes beyond the outer circumference of the detent region (30, 32) and radially outwardly.

9. Hydraulic cylinder according to any one of the preceding claims, **characterized in that** there are provided several detent regions (26, 28, 30, 32) at the piston inner part (24) with respectively associated undercut regions (34, 36, 38, 40) at the piston outer part (20), which regions are arranged to be offset in steps of decreasing diameter in the direction of the pressure chamber (22).

10. Hydraulic cylinder according to claim 9, **characterized in that** the undercut regions (34, 36, 38, 40) are formed to be undercut to different extents and that the piston outer part (20) has at the outer circumferential side a running surface (66) for at least one sealing element (60, 64) seated in the cylinder housing (12), wherein the undercut region (34) formed to be most strongly undercut is disposed at a location spaced from the running surface (66) in the axial direction of the piston (18).

11. Hydraulic cylinder according to any one of the preceding claims, **characterized in that** the piston inner part (24) has at least one projection (128, 130, 132), which encircles its circumferential surface without or with interruption and is nose-shaped as seen in a longitudinal section and which is spaced in axial direction of the piston (18) from the detent region (26, 28, 30, 32) and serves for centering the piston inner part (24) in the piston outer part (20).

12. Hydraulic cylinder according to any one of the preceding claims, **characterized in that** the piston (18) is guided in the cylinder housing (12) by means of the piston inner part (24).

13. Hydraulic cylinder according to claim 12, **characterized in that** the piston inner part (24) has an annular collar (86) which protrudes radially outwardly beyond the outer circumference of the piston outer part (20) and serves for guidance of the piston (18) in the cylinder housing (12).

14. Hydraulic cylinder according to any one of the preceding claims, **characterized in that** a projection (76), which serves for fastening a signal element, particularly an annular magnet (78), to the piston (18), is connected with the base (74) of the piston outer part (20) in the direction of the pressure chamber (22).

15. Hydraulic cylinder according to claim 14, **characterized in that** the projection (76) consists of a plurality of spring arms (80) which are provided approximately centrally with an abutment (82) for the signal element (78) and formed to be hook-shaped at the free end in order to engage behind the signal element (78).

16. Hydraulic cylinder according to any one of the preceding claims, **characterized in that** the piston outer part (20) consists of a thermoplastic, preferably a glassfiber-reinforced or mineral-filled polyphthalmide (PPA).

17. Hydraulic cylinder according to any one of the preceding claims, **characterized in that** the piston inner part (24) consists of a thermoplastic, preferably a glassfiber-reinforced polyamide (PA).

18. Method of producing the piston (18) for a hydraulic cylinder (10) according to any one of the preceding claims, comprising the following steps:
injection-molding the piston inner part (24) from plastics material and forming the at least one detent region (26, 28, 30, 32) at the outer circumference of the piston inner part (24),
injection-molding the beaker-shaped piston outer part (20) from plastics material with use of a tool core (138) for formation of a receiving region (116) for the piston inner part (24), wherein the tool core (138) has at the outer circumference an elevated profile (142, 144) for formation of the undercut region (34, 36, 38, 40) at the inner circumference of the piston outer part (20) and at the end of the injection-molding process is drawn out of the piston outer part (20) with at least partial resilient deformation of the piston outer part (20) (forced removal from mold), and
introducing the piston inner part (24) into the piston outer part (20) until the detent region (26, 28, 30, 32) at the outer circumference of the piston inner part (24) after resilient springing in detents in the associated undercut region (34, 36, 38, 40) of the piston outer part (20) for formation of the snap connection.

19. Method according to claim 18, **characterized in that** the at least one detent region (26, 28, 30, 32) at the outer circumference of the piston inner part (24) is formed at the time of injection-molding thereof.

## Revendications

1. Cylindre hydraulique, notamment maître-cylindre (10) pour un système d'actionnement hydraulique d'embrayage ou de freinage pour véhicules automobiles, comprenant un carter de cylindre (12), un piston (18), et un élément d'actionnement (19), le piston (18) étant moulé par injection, en plusieurs parties, en matière plastique, avec une partie extérieure de piston (20) en forme de pot, qui délimite de manière variable une chambre de pression (22) dans le carter de cylindre (12), et avec une partie intérieure de piston (24) fixée dans la partie extérieure de piston (20) et reliée de manière interactive à l'élément d'actionnement (19),
**caractérisé en ce que** la partie intérieure de piston (24) est fixée par complémentarité de formes dans la partie extérieure de piston (20) au moyen d'une liaison par encliquetage, pour laquelle au moins une zone d'encliquetage (26, 28, 30, 32) formée sur la périphérie extérieure de la partie intérieure de piston (24) et pouvant s'escamoter de manière élastique pendant le montage du piston, vient s'encliqueter dans une zone en contre-dépouille (34, 36, 38, 40) associée, qui est réalisée sans enlèvement de copeaux sur la périphérie intérieure de la partie extérieure de piston (20), par démoulage forcé lors du moulage par injection de cette dernière.

2. Cylindre hydraulique selon la revendication 1, **caractérisé en ce que** la partie extérieure de piston (20) présente un fond (74) dirigé vers la chambre de pression (22) et contre lequel s'appuie la partie intérieure de piston (24) fixée dans la partie extérieure de piston (20), par l'intermédiaire d'une surface frontale (98) dirigée vers la chambre de pression (22).

3. Cylindre hydraulique selon la revendication 1 ou la revendication 2, **caractérisé en ce que** la zone d'encliquetage (26, 28, 30, 32) dépasse radialement vers l'extérieur d'une surface enveloppe de la partie intérieure de piston (24), par un contour (100, 102, 104, 106) convexe vu en coupe longitudinale.

4. Cylindre hydraulique selon l'une des revendications précédentes, **caractérisé en ce que** la zone en contre-dépouille (34, 36, 38, 40) est formée dans une surface intérieure de la partie extérieure de piston (20), par un contour (108, 110, 112, 114) concave vu en coupe longitudinale.

5. Cylindre hydraulique selon les revendications 3 et 4, **caractérisé en ce que** le contour convexe (100, 102, 104, 106) de la zone d'encliquetage (26, 28, 30, 32) présente un diamètre maximal(D_{K}), qui, avant le montage de la partie intérieure de piston (24) dans la partie extérieure de piston (20), est très légèrement plus grand que le diamètre maximal (d_{K}) du contour concave (108, 110, 112, 114) de la zone en contre-dépouille (34, 36, 38, 40) associée.

6. Cylindre hydraulique selon les revendications 3 et 4 ou selon la revendication 5, **caractérisé en ce que** le contour concave (108, 110, 112, 114) de la zone en contre-dépouille (34, 36, 38, 40) présente par rapport au contour convexe (100, 102, 104, 106) de la zone d'encliquetage (26, 28, 30, 32) associée, dans l'état monté du piston (18), un décalage axial (O) en direction de la chambre de pression (22).

7. Cylindre hydraulique selon l'une des revendications précédentes, **caractérisé en ce que** la partie intérieure de piston (24) est pourvue, vu dans la direction axiale du piston (18) au niveau de la zone d'encliquetage (26, 28, 30, 32), en vue d'augmenter l'élasticité de celle-ci, d'au moins une ouverture de passage (120, 122).

8. Cylindre hydraulique selon l'une des revendications précédentes, **caractérisé en ce que** la zone d'encliquetage (30, 32) présente au moins un bras élastique (124) s'étendant dans la direction périphérique de la partie intérieure de piston (24) et dont l'extrémité libre (126) dépasse par ailleurs radialement vers l'extérieur, de la périphérie extérieure de la zone d'encliquetage (30, 32), avant le montage de la partie intérieure de piston (24) dans la partie extérieure de piston (20).

9. Cylindre hydraulique selon l'une des revendications précédentes, **caractérisé en ce que** plusieurs zones d'encliquetage (26, 28, 30, 32) sont prévues sur la partie intérieure de piston (24) avec des zones en contre-dépouille (34, 36, 38, 40) respectivement associées sur la partie extérieure de piston (20), qui sont agencées de façon décalée et étagée avec des diamètres décroissants en direction de la chambre de pression (22).

10. Cylindre hydraulique selon la revendication 9, **caractérisé en ce que** les zones en contre-dépouille (34, 36, 38, 40) sont réalisées avec une contre-dépouille diversement marquée, et **en ce que** la partie extérieure de piston (20) présente sur la périphérie extérieure, une surface de portée (66) pour au moins un élément d'étanchéité (60, 64) monté dans le carter de cylindre (12), la zone en contre-dépouille (34) dont la contre-dépouille est la plus marquée se trouvant en un endroit qui est espacé de la surface de portée (66) dans la direction axiale du piston (18).

11. Cylindre hydraulique selon l'une des revendications précédentes, **caractérisé en ce que** la partie intérieure de piston (24) présente au moins une protubérance (128, 130, 132) en forme de talon vu en coupe longitudinale, qui s'étend de manière périphérique de façon ininterrompue ou interrompue sur sa surface périphérique, est espacée de la zone d'encliquetage (26, 28, 30, 32) dans la direction axiale du piston (18), et sert au centrage de la partie intérieure de piston (24) dans la partie extérieure de piston (20).

12. Cylindre hydraulique selon l'une des revendications précédentes, **caractérisé en ce que** le piston (18) est guidé au moyen de la partie intérieure de piston (24) dans le carter de cylindre (12).

13. Cylindre hydraulique selon la revendication 12, **caractérisé en ce que** la partie intérieure de piston (24) présente une collerette annulaire (86), qui fait saillie radialement vers l'extérieur au-delà de la périphérie extérieure de la partie extérieure de piston (20) et sert au guidage du piston (18) dans le carter de cylindre (12).

14. Cylindre hydraulique selon l'une des revendications précédentes, **caractérisé en ce qu'**au fond (74) de la partie extérieure de piston (20) se raccorde, en direction de la chambre de pression (22), un prolongement (76) qui sert à la fixation d'un élément de signalisation, notamment d'un aimant annulaire (78), sur le piston (18).

15. Cylindre hydraulique selon la revendication 14, **caractérisé en ce que** le prolongement (76) est constitué de plusieurs bras élastiques (80), qui sont pourvus, sensiblement au milieu, d'une butée (82) pour l'élément de signalisation (78), et sont d'une configuration en forme de crochet à leur extrémité libre, pour venir s'engager en contre-dépouille derrière l'élément de signalisation (78).

16. Cylindre hydraulique selon l'une des revendications précédentes, **caractérisé en ce que** la partie de piston extérieure (20) est réalisée en un thermoplastique, de préférence un polyphtalamide (PPA) à charges minérales.

17. Cylindre hydraulique selon l'une des revendications précédentes, **caractérisé en ce que** la partie intérieure de piston (24) est réalisée en un thermoplastique, de préférence un polyamide (PA) renforcé de fibres de verre.

18. Procédé de fabrication d'un piston (18) pour un cylindre hydraulique (10) selon l'une des revendications précédentes, comprenant les étapes suivantes :
moulage par injection de la partie intérieure de piston (24) en matière plastique et formation de ladite au moins une zone d'encliquetage (26, 28, 30, 32) à la périphérie extérieure de la partie intérieure de piston (24),
moulage par injection de la partie extérieure de piston (20) en forme de pot, en matière plastique, en utilisant un noyau d'outillage (138) pour former une zone de logement de réception (116) pour la partie intérieure de piston (24), le noyau d'outillage (138) présentant sur la périphérie extérieure, un contour en saillie (142, 144) pour former la zone de contre-dépouille (34, 36, 38, 40) sur la périphérie intérieure de la partie extérieure de piston (20), et étant retiré, à la fin de l'opération de moulage par injection, de la partie extérieure de piston (20), par au moins une déformation partiellement élastique de la partie extérieure de piston (20) (démoulage forcé), et
introduction de la partie intérieure de piston (24) dans la partie extérieure de piston (20) jusqu'à ce que la zone d'encliquetage (26, 28, 30, 32) à la périphérie extérieure de la partie intérieure de piston (24) vienne s'encliqueter, après rétractation élastique, dans la zone en contre-dépouille (34, 36, 38, 40) de la partie extérieure de piston (20), pour réaliser la liaison par encliquetage.

19. Procédé selon la revendication 18, **caractérisé en ce que** ladite au moins une zone d'encliquetage (26, 28, 30, 32) à la périphérie extérieure de la partie intérieure de piston (24), est formée lors du moulage par injection de cette dernière.
